# EUROPEAN PATENT SPECIFICATION

(11) **EP 1 702 744 B1**
(45) Date of publication and mention of the grant of the patent: **22.06.2011**
(21) Application number: 06004881.6
(22) Date of filing: 09.03.2006
(51) Int. Cl.: B29D 30/58, B29D 30/60, B60C 11/00

(54) **Tire for two-wheeled vehicle and manufacturing method of the same**
Reifen für Zweirad-Fahrzeug und Reifenherstellverfahren
Pneumatique pour deux-roues et procédé de fabrication de pneumatique

(30) Priority: 15.03.2005 JP 2005073621
(43) Date of publication of application: 20.09.2006
(73) Proprietor: SUMITOMO RUBBER INDUSTRIES, LTD., Kobe-shi, Hyogo-ken (JP)
(72) Inventor: Tanaka, Takashi c/o Sumitomo Rubber Ind., Ltd., Kobe-shi Hyogo-ken (JP)
(74) Representative: Manitz, Finsterwald & Partner GbR

(56) References cited:
- EP-A- 1 175 992
- PATENT ABSTRACTS OF JAPAN vol. 1998, no. 01, 30 January 1998 (1998-01-30) & JP 09 239865 A (YOKOHAMA RUBBER CO LTD:THE), 16 September 1997 (1997-09-16)
- PATENT ABSTRACTS OF JAPAN vol. 2000, no. 09, 13 October 2000 (2000-10-13) & JP 2000 158910 A (BRIDGESTONE CORP), 13 June 2000 (2000-06-13)
- PATENT ABSTRACTS OF JAPAN vol. 016, no. 428 (M-1307), 8 September 1992 (1992-09-08) & JP 04 146122 A (YOKOHAMA RUBBER CO LTD:THE), 20 May 1992 (1992-05-20)
- PATENT ABSTRACTS OF JAPAN vol. 2003, no. 07, 3 July 2003 (2003-07-03) & JP 2003 071945 A (BRIDGESTONE CORP), 12 March 2003 (2003-03-12)

## Description

### BACKGROUND OF THE INVENTION

### Field of the Invention

The present invention relates to a tire for a two-wheeled vehicle and a method of manufacturing such a tire employing a strip-wind method for shoulder portions of a tread rubber.

### Description of the Related Art

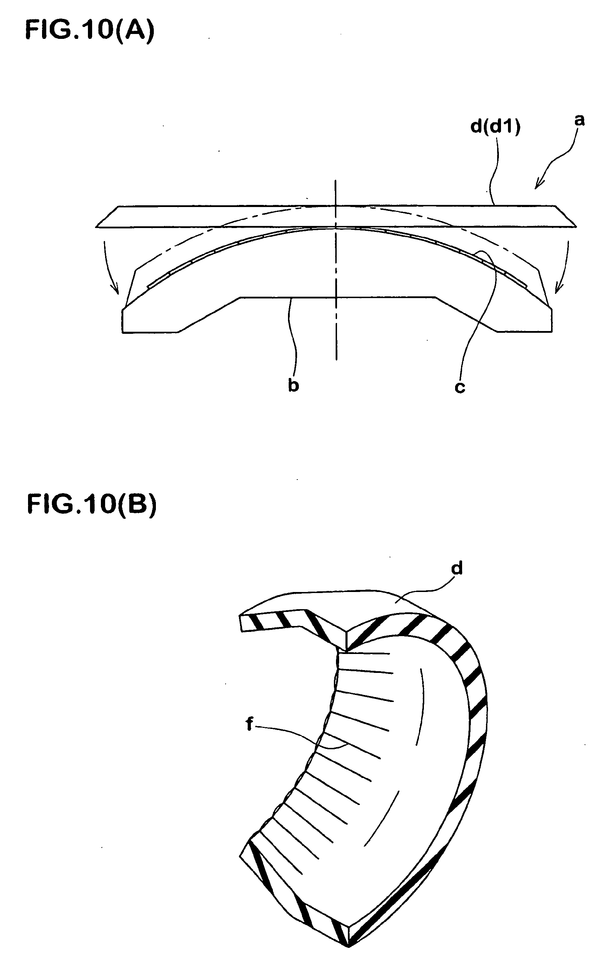

In tires for use in a two-wheeled vehicle, tread portions are formed with convex arc-like profiles at a small radius of curvature in view of properties in that turning movements are performed upon largely banking the vehicle body. For forming a tread portion (a) of such type of tires, a profile deck (b) (former) of a shape that corresponds to that of the convex arc-like profiles is used whereupon a band ply (c) and a tread rubber (d) are sequentially laminated along its outer peripheral surface as shown in Fig. 10(A).

At this time, the tread rubber (d) is formed by employing a wide and flat rubber material (d1), which is formed through extrusion from a rubber extruder, forming the same into a right cylindrical shape by winding the same once in the tire circumferential direction, and winding the right cylindrical shaped body down radially inward from the tire equator side towards tread end sides while pressing the same against the profile deck (b). A drawback was accordingly caused in that wrinkles (f) originating from circumferential length differences were formed at tread end sides of the tread rubber (d) that lead to degradations in uniformity such as unevenness of rubber gauge thickness as shown in Fig. 10(B).

On the other hand, it is being suggested in tires to form rubber members such as tread rubber, sidewall rubber, clinch rubber or breaker cushion rubber of a wound body of so-called strip-wind method in which long and narrow tape-like rubber strips are spirally wound. For convenience' sake, a conventional method of winding a flat rubber material once may also be referred to as a once-wind method.

The inventor of the present invention have thus suggested preventing occurrence of the afore-mentioned wrinkles (f) by employing the strip-wind method for the tread rubber of a tire for a two-wheeled vehicle. However, since the tread rubber is of large thickness, drawbacks are exhibited in that it takes time in performing winding so that the productivity is harmed.

JP 09 239865 A shows a regenerated pneumatic tire comprising a tread part. It comprises shoulder rubber portions and a central rubber portion located between the shoulder rubber portions.

A manufacturing method of a pneumatic tire having a tread comprising a central portion and shoulder portions is disclosed in JP 04 146122 A.

EP 1 175 992 A2 is directed to a method of producing a tread. A central portion is provided which is surrounded by shoulder portions comprising a strip-wound body. The shoulder portions are formed by high electrically conductive rubber to reduce static electricity.

A tire for a two-wheeled vehicle is disclosed in JP 2003/071945 A.

A tire for a two-wheeled vehicle having the features of the preamble of claim 1 and a method of manufacturing a tire for a two-wheeled vehicle having the features of the preamble of claim 4 are known from JP 2000/ 158910 A.

It is the object of the present invention to provide a tire for a two-wheeled vehicle and a manufacturing method of such a tire capable of preventing occurrence of wrinkles at the tread rubber while securing certain productivity and of improving uniformity on the basis of a structure in which the tread rubber is partitioned into three.

This object is achieved with a tire having the features of claim 1 and a method of manufacturing a tire having the features of claim 4. Subclaims are directed to preferable embodiments.

In the present invention, the tread rubber is partitioned into three, that is, a central rubber portion and shoulder rubber portions on both sides thereof, wherein the central rubber portion is formed through the once-wind method while the shoulder rubber portions are formed through the strip-wind method. It is accordingly possible to prevent occurrence of wrinkles on tread end sides while securing certain productivity and to improve uniformity.

In the strip-wind method, level differences of the rubber strips formed on the surface thereof are apt to remain as micro marks after vulcanization molding. Such marks will cause no particular problems in case of tread rubber in tires for use in four-wheeled vehicles. However, in case of two-wheeled vehicles that perform turning movements upon largely banking the vehicle body, large lateral force acts on the tread surface when performing turning movements. Consequently, where the strip-wind method is employed without careful consideration, there will be a tendency in that cracks are likely to be formed between rubber strips that originate from those marks. While it is particularly desirable in tires for use in two-wheeled vehicles that shoulder regions of the tread rubber are formed of rubber having a large hysteresis loss that exhibits superior grip performance for the purpose of improving turning performances; however, cracks between rubber strips are more likely to occur in such instance.

However, by winding the rubber strip from the tread end sides towards the tire equator, lateral force caused through turning movements can act in the direction opposite to the direction of peeling the rubber strip. It is accordingly possible to reliably prevent cracks from being formed between rubber strips also in the presence of such marks.

### BRIEF EXPLANATION OF THE DRAWINGS

Fig. 1 is a sectional view showing one embodiment of the tire for a two-wheeled vehicle according to the present invention;
Fig. 2 is a sectional view showing a tread portion thereof in enlarged form;
Fig. 3 is a sectional view for explaining actions and effects thereof;
Fig. 4 is a sectional view for schematically showing a circular arc width of a central rubber portion;
Fig. 5 is a sectional for explaining a green shoulder rubber portion forming process;
Fig. 6 is a sectional view for explaining a green central rubber portion forming process;
Fig. 7 is a diagram showing winding of the rubber strip.
Fig. 8 is sectional view showing a rubber strip;
Fig. 9 is a sectional view showing another example of a method for manufacturing a tire for a two-wheeled vehicle; and
Fig. 10(A) is a sectional view of a conventional tread rubber and Fig. 10 (B) is a partial perspective view thereof for explaining a conventional manufacturing method and drawbacks of the method..

### DESCRIPTION OF THE PREFERRED EMBODIMENT

An embodiment of the present invention will now be explained together with illustrated examples thereof.

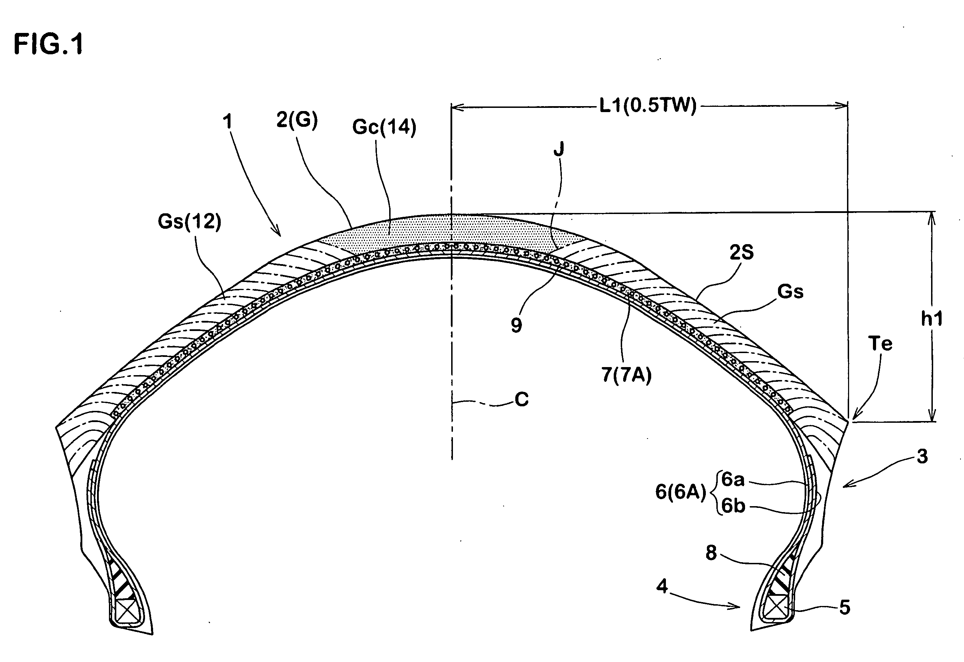

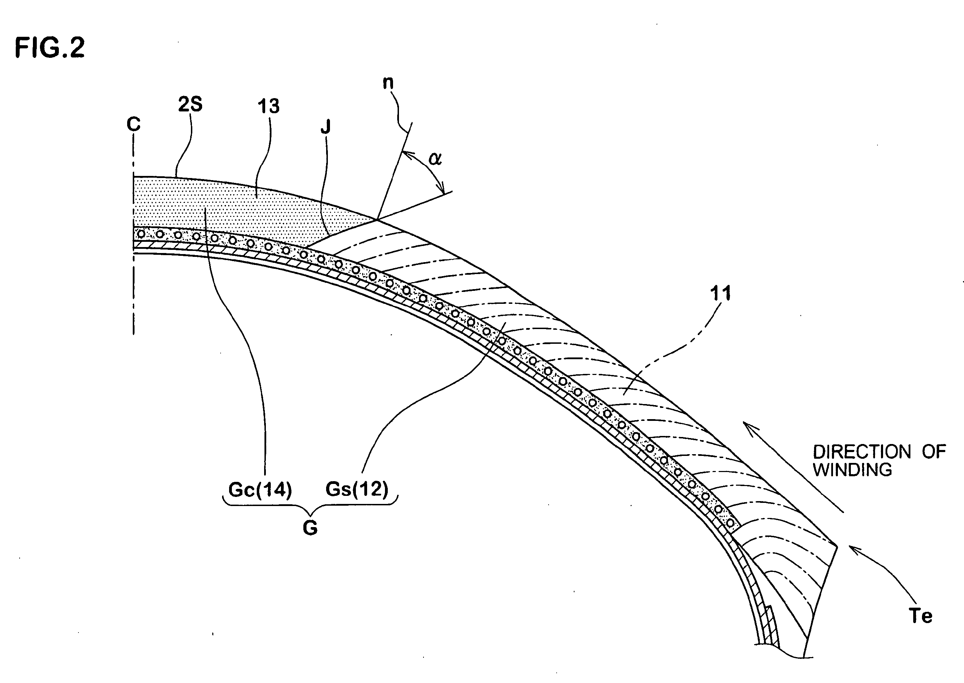

As shown in Figs. 1 and 2, a tread surface 2S of a tire 1 for use in a two-wheeled vehicle includes a tread portion 2 that extends from the tire equator C towards tread ends Te while curving in a convex arc-like shape. Since a tread width TW, which corresponds to a distance between the tread ends Te, Te in the tire axial direction, comprises the tire maximum width, it is possible to perform turning movements at a large bank angle. The present example illustrates a preferable example in which a camber value h1/L1 of the tread surface 2S, that is, a ratio h1/L1 of the tire axial width L1 (=0.5 TW) from the tire equator C to the tread ends Te of the tread surface 2S to the tire radial height h1 is defined to be 0.3 to 0.7.

The tire for a two-wheeled vehicle 1 further includes a carcass 6 that extends from the tread portion 2 over sidewall portions 3 up to bead cores 5 of bead portions 4 and a band layer 7 that is disposed in the tread portion 2 and radially outside of the carcass 6.

The carcass 6 is configured from at least one carcass ply in which carcass cords are aligned at an angle of, for instance, 70 to 90°, wherein one carcass ply 6A is employed in the present example. The carcass ply 6A includes turnup portions 6b on both ends of a ply main body portion 6a that bridges between the bead cores 5, 5 at which the ply is turned up around the bead cores 5 from inside to outside to be engaged thereat. A bead apex rubber 8 for reinforcing the bead extending radially outside from the bead cores 5 is disposed between the ply main body portion 6a and the turnup portions 6b.

The band layer 7 is configured from at least one band ply in which band cords are spirally wound with respect to the tire circumferential direction at an angle of, for instance, not more than 5°, wherein one band ply 7A is used in the present example. The band ply 7A is provided in a range of not less than 75% of the tread width TW along the tire equator C for firmly reinforcing the tread portion 2 through hoop effects. In this respect, it is possible to provide a belt layer (not shown) instead of the band layer 7 or between the band layer 7 and the carcass 6. The belt layer is provided with not less than one, and usually two belt plies in which belt cords are aligned at angle of, for example, 15 to 60° with respect to the tire circumferential direction, and it serves to improve tread rigidity and steering stability. Organic fiber cords such as nylon, rayon, polyester or aromatic polyamide cords may be suitably used as the carcass cords, band cords and belt cords. In this respect, the band layer 7 and the belt layer are generically named as a tread reinforcing cord layer 9.

Next, the tire 1 of the present embodiment is arranged in that the tread rubber G that includes the tread portion 2 is partitioned into three, namely into shoulder rubber portions Gs on the tread ends Te and a central rubber portion Gc disposed between the shoulder rubber portions Gs, Gs.

In view of properties of performing turning movements upon largely banking the vehicle body, it is particularly important in tires for use in a two-wheeled vehicle to improve grip performance of turning movements for sake of safe driving. In this regard, the shoulder portions Gs that contact the ground when performing turning movements are formed of rubber having a high hysteresis loss that exhibits large frictional force with the loss tangent tan δ1 being in the range of 0.2 to 0.4. In contrast thereto, the central rubber portion Gc is formed of rubber having a low hysteresis loss having a loss tangent tan δ2 that is smaller than that of the shoulder rubber portions Gs. Since rubber of low hysteresis loss has a low rolling resistance and low heat generating properties, it is capable of improving fuel consumption properties and high speed durability that are required when performing straight-ahead running and it can exhibit superior wear resistance. For this purpose, the loss tangent tan δ2 of the central rubber portion Gs is preferably set to not more than 90% and more preferably not more than 80% of the loss tangent tan δ1 of the shoulder rubber portions Gs. In this respect, loss tangent tan δ values are values obtained through measurement using a viscoelasticity spectrometer manufactured by IWAMOTO SEISAKUSHO under conditions for the temperature being 70°C, for the frequency being 10 Hz and for the dynamic strain ration being 2%.

In the tread rubber G, borderlines J between the shoulder rubber portion Gs and the central rubber portion Gc are preferably inclined with respect to a normal line n of the tread surface 2S at an angle α of not less than 20°. With this arrangement, transition from straight-ahead running to turning can be facilitated, for instance, in that changes of rubber properties from that of the central rubber portion Gc to that of the shoulder rubber portions Gs can be made smooth. Moreover, since the borderlines J will become longer, the adhesive strength between the shoulder rubber portion Gs and the central rubber portion Gc can be secured high.

In the present embodiment, a once-wound body 14 obtained by once winding a width and flat rubber material 13 is employed as the central rubber portion Gc while a strip wound body 12 obtained by circumferentially and spirally winding a narrow and long rubber strip 11 is employed as the shoulder rubber portions Gs.

In this manner, by employing the strip-wind method for the shoulder rubber portions Gs at which the circumferential length difference is large, the tread rubber G can be directly formed to have a small arc-like contour that suits the tread profile of a completed tire to thus prevent occurrence of wrinkles that were conventionally seen at tread ends (Fig. 10(B)) and to improve uniformity of the tire. Since the once-wind method is employed for the central rubber portion Gc, time required for winding can be remarkably shortened when compared to a case in which the entire tread rubber is formed through the strip-wind method so that it is possible to secure productivity.

In the strip-windmethod, level differences between rubber strips 11, 11 will occur on the surface thereof that are apt to remain as micro marks after vulcanization molding. Particularly in a two-wheeled vehicle, large lateral force F acts on the tread surface when performing turning movements so that cracks tend to be formed between rubber strips 11, 11 that originate from those marks.

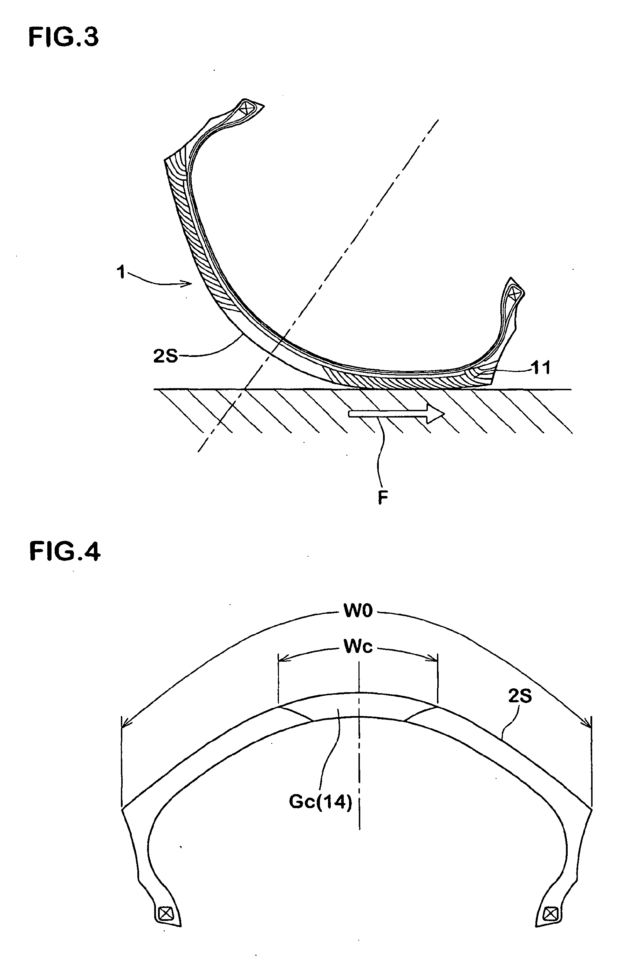

However, in the present example, rubber strips 11 of both shoulder portions Gs are wound from the tread end Te sides towards the tire equator C. Accordingly, lateral force 3 acting on the tread surface 2S when performing turning movements will act in a direction opposite to the direction of peeling the rubber strip 11 as shown in Fig. 3. It will thus be possible to reliably prevent cracks from being formed between the rubber strips 11, 11 even in the presence of such marks. Such crack preventing effects can be sufficiently exhibited also in case the shoulder rubber portions Gs are formed of rubber of high hysteresis loss in which the frictional force is large.

Since the rubber strips 11 of the shoulder rubber portions Gs are wound in the above-described winding direction, the borderlines J will incline in the same inclining direction as the rubber strips 11, that is, they will incline in a radially outward direction with respect to the normal line n. It will accordingly be possible to simultaneously prevent cracks of both, the shoulder rubber portions Gs and the central rubber portion Gc.

In this respect, where the percentage of the once-wound body 14 that includes the central rubber portion Gc is too small, effects of improving productivity cannot be sufficiently exhibited since, for instance, the time required for winding will become long. On the other hand, where it is too large, effects of improving uniformity cannot be sufficiently exhibited since, for instance, occurrence of wrinkle is caused at both ends of the once-wound body 14. Seen from this viewpoint, the circular arc width (Wc) of the central rubber portion Gc on the tread surface 2S that faces along the tread surface 2S is preferably larger than 0.2 times but smaller than 0.6 times the circular arc width of the entire tread surface 2S that faces along the tread surface 2S.

While the present example illustrates a case in which the once-wound body 14 is of single layered structure, it may also be of multilayered structure. It is also possible to form a thin undertread rubber layer (not shown) between the tread rubber G and the tread reinforcing cord layer 9, that exhibits superior adhesiveness for the purpose of improving adhesiveness.

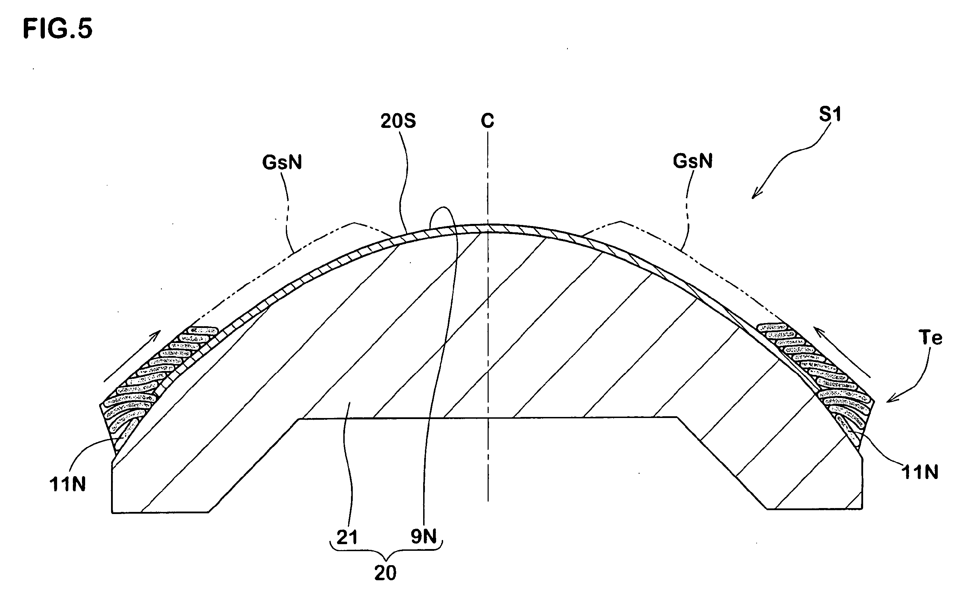

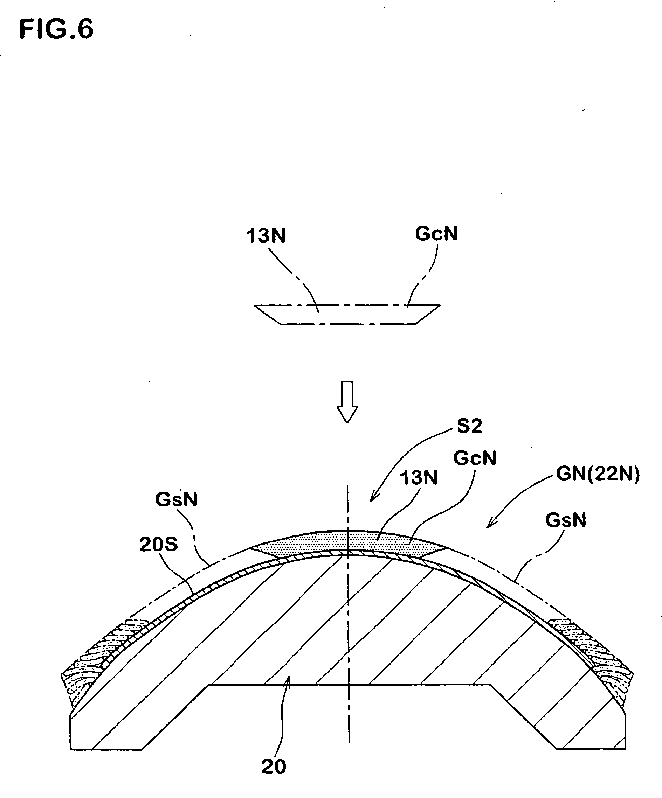

A method for manufacturing the tire 1 for use in a two-wheeled vehicle will now be explained. This manufacturing method is arranged, as shown in Figs. 5 and 6, in that the method includes, in forming a green tire, at least the following:
(1) A green shoulder rubber portion forming process S1 of forming a green shoulder portion GsN by spirally winding a green (non-vulcanized) rubber strip 11N around a mount surface 20S of a cylindrical object to be wound 20 (Fig. 5).
(2) A green central rubber portion forming process S2 of forming a green central rubber portion GcN by employing a wide green flat rubber material 13N that is wound once whereupon the circumferential end portions thereof are lap jointed (Fig. 6).

In the present example, the green central rubber portion forming process S2 is performed after the green shoulder rubber portion forming process S1. In this case, both end portions of the green central rubber portion GcN are overlapped onto winding ends of the green shoulder rubber portions Gs that have been already formed so as to reduce circumferential length differences thereof, and it is accordingly possible to further avoid occurrence of wrinkles at the once-wound body 14.

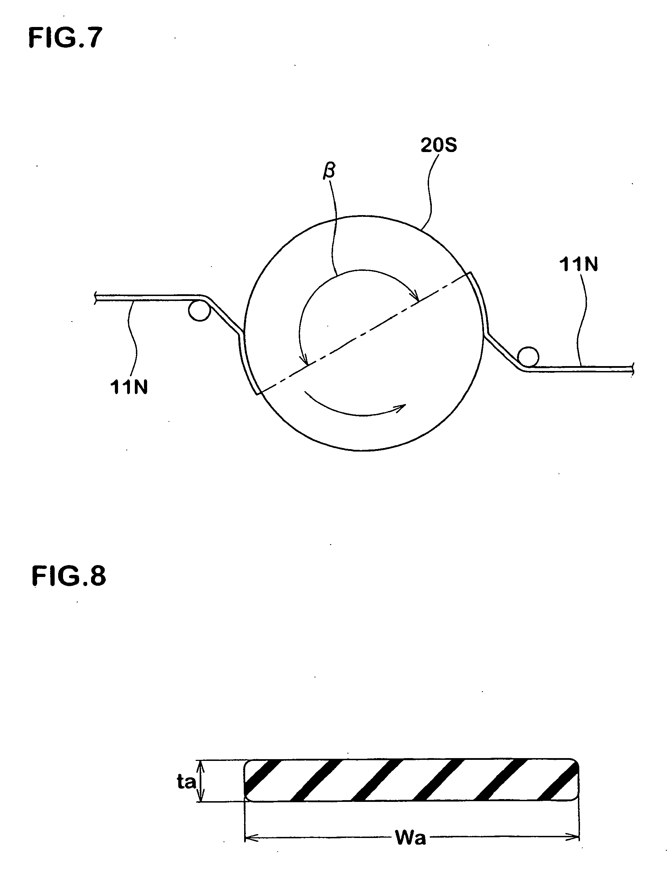

In the green shoulder rubber portion forming process S1, a pair of green rubber strips 11N is employed that are simultaneously wound from the tread end Te sides towards the tire equator C in a partially overlapping manner for forming the green shoulder rubber portion GsN. At this time, the phases of the winding start and the winding end of one green rubber strip 11 are dissimilated from the winding start and the winding end of the other green strip 11N by not less than 90° in the circumferential direction, and preferably at an angle β of 180° as shown in Fig. 7 in view of uniformity. A thin tape-like strip having a rectangular section of a width Wa of 5 to 20 mm and a thickness ta of 0.3 to 1.5 mm can be suitably used as the green rubber strip 11N as shown in Fig. 8.

In the green central rubber portion forming process S2 as shown in Fig. 6, a wide green flat rubber material 13N that has been extruded from a rubber extruder is used that is wound once whereupon circumferential end portions are lap jointed to forma green central rubber portion GcN. The flat rubber material 13N may be of multilayered structure.

In this respect, the present example illustrates a case in which the object to be wound 20 is configured from a profile deck 21 for forming a tread and a green tread reinforcing cord layer 9N formed on the outer periphery thereof, wherein by forming a green tread rubber GN obtained through the above processes S1, S2 on the mount surface 20S that includes the outer surface thereof, a green tread ring 22N is formed. By then adhering green tread ring 22N onto a swollen portion of a laminated body of a green inner liner rubber, which has been obtained by swelling (shaping) the same in a toroidal shape on the molding former, and the green carcass ply, a green tire is formed.

At this time, processes other than the above processes S1 and S2, for instance, a process of forming a green tread reinforcing cord layer 9N on the profile deck 21, a process of forming the laminated body of the green inner liner rubber and the green carcass ply into a cylindrical shape, a process of attaching the bead cores onto the cylindrical laminated body and on both sides thereof, a process of swelling (shaping) the laminated body into a toroidal shape between the bead cores, a process of forming the green tire by adhering the tread ring 22N to the swollen portion of the swollen laminated body, or a process of performing vulcanization molding of the green tire can be performed through methods similar to known ones.

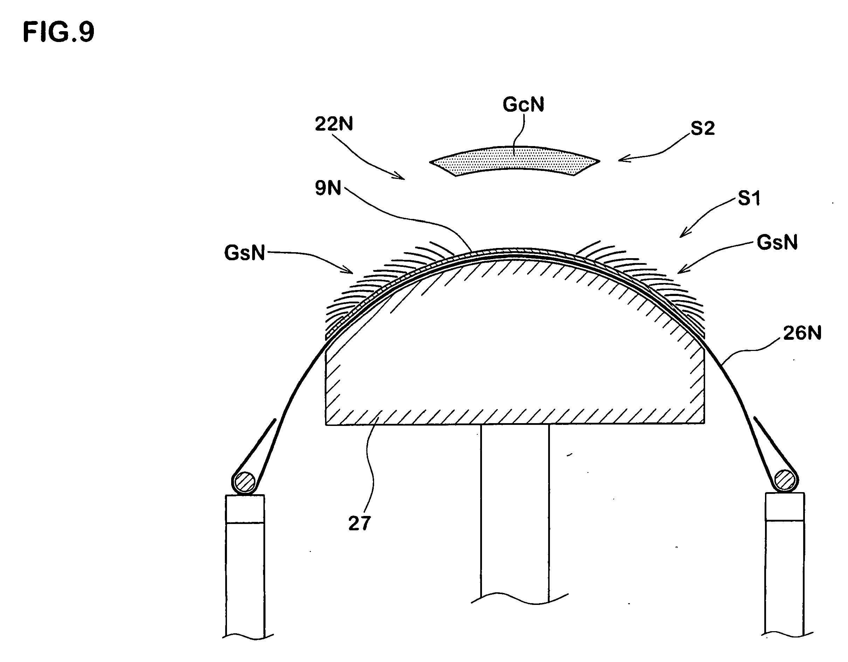

In the above manufacturing method, it is possible to swell (shape) the laminated body 26N of the green inner liner rubber and the green carcass ply into a toroidal shape by means of a core 27 having a contour similar to that of the profile deck 21 to directly form the above-described tread ring 22N on the laminated body 26 supported by the core 27 as shown in Fig. 9. In such an instance, the object to be wound 20 is formed by the toroidal laminated body 26N and the green tread reinforcing cord layer 9N that is formed on the outer periphery thereof.

While a particularly preferred embodiment of the present invention has been explained so far, the present invention is not limited to the illustrated embodiment but may be embodied upon modifying the same into various forms.

### (Examples)

Tires for a two-wheeled vehicle having a tire size of 180/55ZR17 and a structure as shown in Fig. 1 were manufactured on trial according to specifications of Table 1 whereupon productivity and uniformity of the sample tires were tested. Specifications other than those of Fig. 1 were substantially common to all. The rubber strip for strip-winding had a width of 23 mm and a thickness ta of 1.20 mm.

### (1) Productivity

Times required for forming the tread rubber are indicated as indices with that of the Comparative Example 1 being defined as 100. The smaller the value, the shorter the time for forming and the more superior the productivity is.

### (2) Uniformity

An uniformity tester was employed for measuring lateral force variation (LFV) and lateral run out (LROT, LROB), and average values of 20 sample tires each were marked. Measuring conditions were as follows: rim (17 x MT5.50), internal pressure (200 kPa) and load (2.26 kN). The "T" at the end of the term lateral run out (LROT) stands for "top" and denotes the LRO of a shoulder portion molded on the upper mold side of a vertically two-split mold while "B" at the end of the term (LROB) stands for "bottom" and denotes the LRO of a shoulder portion molded on the lower mold side.

**[Table 1]**

| | Comparative Example 1 | Example 1 | Example 2 | Example 3 | Example 4 | Example 5 |
|---|---|---|---|---|---|---|
| Tread rubber | | | | | | |
| -Shoulder rubber portion Gs | STW | STW | STW | STW | STW | STW |
| -Central rubber portion Gc | STW | Once-wound | Once-wound | Once-wound | Once-wound | Once-wound |
| Ratio of circular arc width ((wc)/(w0)) | 1.0 | 0.1 | 0.2 | 0.4 | 0.6 | 0.7 |
| Productivity | 100 | 98 | 90 | 81 | 72 | 67 |
| LFV(O.A.) <N> | 23 | 24 | 24 | 26 | 31 | 41 |
| LROT(O.A.) <mm> | 0.4 | 0.4 | 0.4 | 0.5 | 0.6 | 0.8 |
| LROB(O.A.) <mm> | 0.4 | 0.4 | 0.4 | 0.4 | 0.6 | 0.9 |

| | | | | | | |
|---|---|---|---|---|---|---|
| *STW (Strip-wind) | | | | | | |

## Claims

1. A tire (1) for a two-wheeled vehicle, comprising
a tread portion (2), a tread surface (2S) thereof extending from a tire equator (C) to tread ends (Te) while curving in a convex circular arc form and a tread width (TW) between the tread ends in the tire axial direction corresponding to the tire maximum width,
wherein a tread rubber (G) that forms the tread portion (2) is comprised of shoulder rubber portions (Gs) at the tread end sides and a central rubber portion (Gc) located between the shoulder rubber portions,
**characterized in that**
- the central rubber portion (Gc) is comprised of a once-wound body (14) formed by winding a wide flat rubber material (13) once in the tire circumferential direction,
- each shoulder rubber portion (Gs) is comprised of a strip-wound body (12) formed by spirally winding a narrow and long rubber strip (11) in the tire circumferential direction from the tread end side towards the tire equator side to form adjacent rubber strip windings (11),
- the borderlines between adjacent rubber strip windings (11) incline to the tread end side towards the tread surface and
- the borderline (J) between a shoulder rubber portion (Gs) and the central rubber portion (Gc) inclines in the same inclining direction as the rubber strip windings (11).

2. The tire for a two-wheeled vehicle according to claim 1, wherein a circular arc width (Wc) facing along the tread surface of the central rubber portion (Gc) is larger than 0.2 times but smaller than 0.6 times the circular arc width (W0) facing along the tread surface of the tread surface.

3. The tire for a two-wheeled vehicle according to any one of claims 1 or 2, wherein the loss tangent tan δ1 of each shoulder portion (Gs) is in the range of 0.2 to 4.0 and larger than the loss tangent tan δ2 of the central rubber portion (Gc).

4. A method of manufacturing a tire for a two-wheeled vehicle comprising a tread portion (2), a tread surface (2S) thereof extending from a tire equator (C) to tread ends (Te) while curving in a convex circular arc form and a tread width (TW) between the tread ends in the tire axial direction corresponding to the tire maximum width,
wherein a tread rubber (G) that forms the tread portion (2) is comprised of shoulder rubber portions (Gs) at the tread end sides and a central rubber portion (Gc) located between the shoulder rubber portions, the method being **characterized by**
- a green shoulder rubber portion forming process of forming a pair of green shoulder rubber portions (GsN), each green shoulder rubber portion (GsN) being formed by spirally winding a green rubber strip (11N) in the tire circumferential direction from the tread end side towards the tire equator side on a mount surface (20S) of a cylindrical object (20) to form adjacent rubber strip windings (11N), to be wound such that the borderlines between adjacent rubber strip windings (11N) incline to the tread end side towards the tread surface, and
- a green central rubber portion forming process of forming a green central rubber portion (GcN) by winding a green wide flat rubber material (13N) once in the tire circumferential direction and by lap-jointing end portions thereof in the circumferential direction such that the borderline (J) between a shoulder rubber portion and the central rubber portion inclines in the same direction as the rubber strip windings.

5. The method of manufacturing a tire for a two-wheeled vehicle as claimed in claim 4, wherein the green central rubber forming process is performed after the green shoulder rubber portion forming process.

## Patentansprüche

1. Reifen (1) für ein Zweiradfahrzeug,
der einen Laufflächenabschnitt (2) umfasst, von dem sich eine Laufflächen-Oberfläche (2S) von einem Reifenäquator (C) zu Laufflächenenden (Te) erstreckt, während sie sich in einer Form eines konvexen Kreisbogens krümmt und eine Laufflächenbreite (TW) zwischen den Laufflächenenden in der axialen Richtung des Reifens der maximalen Breite des Reifens entspricht,
wobei ein Laufflächenkautschuk (G), der den Laufflächenabschnitt (2) bildet, aus Schulterkautschukabschnitten (Gs) an den Laufflächenendseiten und einem zentralen Kautschukabschnitt (Gc), der zwischen den Schulterkautschukabschnitten gelegen ist, besteht, **dadurch gekennzeichnet, dass**
- der zentrale Kautschukabschnitt (Gc) aus einem einmal gewickelten Körper (14) besteht, der durch einmaliges Wickeln eines breiten flachen Kautschukmaterials (13) in der Umfangsrichtung des Reifens gebildet ist,
- jeder Schulterkautschukabschnitt (Gs) aus einem Streifenwickelkörper (12) besteht, der durch spiralförmiges Wickeln eines schmalen und langen Kautschukstreifens (11) in der Umfangsrichtung des Reifens von der Laufflächenendseite in Richtung der Reifenäquatorseite gebildet ist, um angrenzende Kautschukstreifenwicklungen (11) zu bilden,
- die Grenzlinien zwischen angrenzenden Kautschukstreifenwicklungen (11) sich zu der Laufflächenendseite in Richtung der Laufflächenoberfläche neigen, und
- die Grenzlinie (J) zwischen einem Schulterkautschukabschnitt (Gs) und dem zentralen Kautschukabschnitt (Gc) sich in die gleiche Neigungsrichtung wie die Kautschukstreifenwicklungen (11) neigt.

2. Reifen für ein Zweiradfahrzeug nach Anspruch 1,
wobei eine Kreisbogenbreite (Wc), die entlang der Laufflächen-Oberfläche des zentralen Kautschukabschnitts (Gc) weist, größer als das 0,2-fache aber kleiner als 0,6-fache der Kreisbogenbreite (W0) ist, die entlang der Laufflächen-Oberfläche der Laufflächen-Oberfläche weist.

3. Reifen für ein Zweiradfahrzeug nach einem der Ansprüche 1 oder 2, wobei der Verlusttangens tan δ1 jedes Schulterabschnitts (Gs) im Bereich von 0,2 bis 4,0 liegt und größer als der Verlusttangens tan δ2 des zentralen Kautschukabschnitts (Gc) ist.

4. Verfahren zum Herstellen eines Reifens für ein Zweiradfahrzeug, der einen Laufflächenabschnitt (2) umfasst, von dem eine Laufflächen-Oberfläche (2S) sich von einem Reifenäquator (C) zu Laufflächenenden (Te) erstreckt, während sie sich in einer Form eines konvexen Kreisbogens krümmt, und eine Laufflächenbreite (TW) zwischen den Laufflächenenden in der axialen Richtung des Reifens der maximalen Breite des Reifens entspricht,
wobei ein Laufflächenkautschuk (G), der den Laufflächenabschnitt (2) bildet, aus Schulterkautschukabschnitten (Gs) an den Laufflächenendseiten und einem zentralen Kautschukabschnitt (Gc), der zwischen den Schulterabschnitten gelegen ist, besteht, wobei das Verfahren **gekennzeichnet ist durch**
- einen Prozess des Bildens eines rohen Schulterkautschukabschnitts zum Bilden eines Paares von rohen Schulterkautschukabschnitten (GsN), wobei jeder rohe Schulterkautschukabschnitt (GsN) **durch** spiralförmiges Wickeln eines rohen Kautschukstreifens (11N) in der Umfangsrichtung des Reifens von der Laufflächenendseite in Richtung der Reifenäquatorseite auf einer Montageoberfläche (20S) eines zylindrischen Objekts (20) gebildet wird, um angrenzende Kautschukstreifenwicklungen (11N) zu bilden, die derart zu wickeln sind, dass die Grenzlinien zwischen angrenzenden Kautschukstreifenwicklungen (11N) sich zu der Laufflächenendseite in Richtung der Laufflächenoberfläche neigen, und
- einen Prozess des Bildens eines rohen zentralen Kautschukabschnitts zum Bilden eines rohen zentralen Kautschukabschnitts (GcN) **durch** einmaliges Wickeln eines rohen breiten flachen Kautschukmaterials (13N) in der Umfangsrichtung des Reifens und **durch** Überlappverbinden von Endabschnitten davon in der Umfangsrichtung, sodass die Grenzlinie (J) zwischen einem Schulterkautschukabschnitt und dem zentralen Kautschukabschnitt sich in die gleiche Richtung wie die Kautschukstreifenwicklungen neigt.

5. Verfahren zum Herstellen eines Reifens für ein Zweiradfahrzeug nach Anspruch 4, wobei der Prozess des Bildens des rohen zentralen Kautschuks nach dem Prozess des Bildens des rohen Schulterkautschukabschnitts durchgeführt wird.

## Revendications

1. Pneumatique (1) pour un véhicule deux-roues, comprenant une portion formant bande de roulement (2), une surface de roulement (2S) de celle-ci s'étendant depuis un équateur (C) du pneumatique jusqu'à des extrémités de roulement (Te) tout en s'incurvant sous forme d'un arc circulaire convexe, et une largeur de roulement (TW) entre les extrémités de roulement dans la direction axiale du pneumatique, correspondant à la largeur maximum du pneumatique,
dans lequel un caoutchouc de roulement (G) qui forme la portion formant bande de roulement (2) comprend des portions de caoutchouc en épaulement (Gs) au niveau des côtés des extrémités de roulement et une portion de caoutchouc centrale (Gc) située entre les portions de caoutchouc en épaulement,
**caractérisé en ce que**
- la portion de caoutchouc centrale (Gc) est constituée d'un corps (14) enroulé une fois, formé en enroulant un matériau en caoutchouc plat et large (13) une fois dans la direction circonférentielle du pneumatique,
- chaque portion de caoutchouc en épaulement (Gs) est constituée d'un corps (12) enroulé à partir d'une bande, formé en enroulant en spirale une bande (11) étroite et longue en caoutchouc dans la direction circonférentielle du pneumatique depuis le côté de l'extrémité de roulement vers le côté de l'équateur du pneumatique pour former des enroulements adjacents de bande en caoutchouc (11),
- les lignes de bordure entre des enroulements adjacents de bande en caoutchouc (11) sont inclinées vers le côté de l'extrémité de roulement en direction de la surface de roulement, et
- la ligne de bordure (J) entre une portion de caoutchouc en épaulement (Gs) et la portion de caoutchouc centrale (Gc) est inclinée dans la même direction d'inclinaison que les enroulements (11) de la bande en caoutchouc.

2. Pneumatique pour un véhicule deux-roues selon la revendication 1, dans lequel une largeur d'arc circulaire (Wc) en face le long de la surface de roulement de la portion de caoutchouc centrale (Gc) est plus grande que 0,2 fois mais plus petite que 0,6 fois la largeur d'arc circulaire (WO) en face le long de la surface de roulement de la surface de roulement.

3. Pneumatique pour un véhicule deux-roues selon l'une quelconque des revendications 1 ou 2, dans lequel la tangente de l'angle de perte tan δ1 de chaque portion en épaulement (Gs) est dans la plage de 0,2 à 4,0 et est supérieure à la tangente de l'angle de perte tan δ2 de la portion de caoutchouc centrale (Gc).

4. Procédé de fabrication d'un pneumatique pour un véhicule deux-roues, comprenant une portion formant bande de roulement (2), une surface de roulement (2S) de celle-ci s'étendant depuis un équateur (C) du pneumatique jusqu'à des extrémités de roulement (Te) tout en s'incurvant sous forme d'un arc circulaire convexe, et une largeur de roulement (TW) entre les extrémités de roulement dans la direction axiale du pneumatique, correspondant à la largeur maximum du pneumatique,
dans lequel un caoutchouc de roulement (G) qui forme la portion formant bande de roulement (2) est constitué de portions de caoutchouc en épaulement (Gs) au niveau des côtés des extrémités de roulement et d'une portion de caoutchouc centrale (Gc) située entre les portions de caoutchouc en épaulement, le procédé étant **caractérisé par**
- un processus de formation d'une portion de caoutchouc en épaulement cru consistant à former une paire de portions de caoutchouc en épaulement crues (GsN), chaque portion de caoutchouc en épaulement crue (GsN) étant formée en enroulant en spirale une bande en caoutchouc cru (11N) dans la direction circonférentielle du pneumatique depuis le côté de l'extrémité de roulement vers le côté de l'équateur du pneumatique sur une surface de montage (20S) d'un objet cylindrique (20) pour former des enroulements adjacents (11N) d'une bande en caoutchouc, enroulés de telle façon que les lignes de bordure entre des enroulements adjacents (11N) de la bande en caoutchouc sont inclinées vers le côté de l'extrémité de roulement en direction de la surface de roulement, et
- un processus de formation d'une portion de caoutchouc centrale crue consistant à former une portion de caoutchouc centrale crue (GcN) en enroulant un matériau en caoutchouc cru (13N) large et plat une fois dans la direction circonférentielle du pneumatique, et en réunissant en chevauchement des portions terminales de celui-ci dans la direction circonférentielle, de telle façon que la ligne de bordure (J) entre une portion de caoutchouc en épaulement et la portion de caoutchouc centrale s'incline dans la même direction que les enroulements de bande en caoutchouc.

5. Procédé de fabrication d'un pneumatique pour un véhicule deux-roues selon la revendication 4, dans lequel le processus de formation d'un caoutchouc central cru est exécuté après le processus de formation d'une portion de caoutchouc en épaulement crue.
